# EUROPÄISCHE PATENTSCHRIFT

(11) **EP 0 603 937 B1**
(45) Veröffentlichungstag und Bekanntmachung des Hinweises auf die Patenterteilung: **17.03.1999**
(21) Anmeldenummer: 93203501.7
(22) Anmeldetag: 14.12.1993
(51) Int. Cl.: G11B 15/18, G11B 15/10

(54) **Aufzeichnungs- und/oder Wiedergabegerät, in das eine Magnetbandkassette einsetzbar ist**
Recording and/or reproducing apparatus for a magnetic tape cassette
Appareil d'enregistrement et/ou de reproduction pour cassette à bande magnétique

(30) Priorität: 21.12.1992 AT 2529/92
(43) Veröffentlichungstag der Anmeldung: 29.06.1994
(73) Patentinhaber: Koninklijke Philips Electronics N.V., 5621 BA Eindhoven (NL)
(72) Erfinder: Fischer, Karl, Internationaal Octrooinbureau B.V., NL-5656 AA Eindhoven (NL)
(74) Vertreter: Cuppens, Hubertus Martinus Maria

(56) Entgegenhaltungen:
- EP-A- 0 503 359
- DE-A- 2 204 663
- DE-A- 2 818 122
- US-A- 3 702 907

## Beschreibung

Die Erfindung bezieht sich ein Aufzeichnungs- und/oder Wiedergabegerät, in das eine ein Magnetband enthaltende Kassette einsetzbar ist, mit mindestens einem Magnetkopf zum Abtasten eines in einer in das Gerät eingesetzten Kassette enthaltenen Magnetbandes. mit mindestens einer zwischen einer Ruhelage und einer Andrucklage verstellbaren, in ihrer Andrucklage auf eine in das Gerät eingesetzte Kassette einwirkenden, zur Ruhelage hin federbelasteten Andruckeinrichtung zum Belasten der eingesetzten Kassette in Richtung zu dem Magnetkopf, mit einer zwischen einer ersten Schaltlage und einer zweiten Schaltlage verstellbaren, zur ersten Schaltlage hin federbelasteten Steuereinrichtung zum Einschalten einer Betriebsart des Gerätes in ihrer zweiten Schaltlage und mit einer zum Festhalten der Steuereinrichtung in ihrer zweiten Schaltlage vorgesehenen, zwischen einer Freigabelage und einer Verriegelungslage verstellbaren, zur Verriegelungslage hin federbelasteten Verriegelungseinrichtung, die beim Entnehmen einer Kassette aus dem Gerät in ihre Freigabelage verstellt wird, wobei die Andruckeinrichtung und die Verriegelungseinrichtung zum miteinander Zusammenwirken angeordnet und ausgebildet sind und wobei bei nichteingesetzter Kassette die hierbei in ihrer Ruhelage befindliche Andruckeinrichtung die Verriegelungseinrichtung in ihrer Freigabelage hält und bei eingesetzter Kassette die hierbei in ihre Andrucklage verstellte Andruckeinrichtung die Verriegelungseinrichtung zur Verstellung in ihre Verriegelungslage freigibt.

Ein solches Gerät gemäß der im vorstehenden ersten Absatz angeführten Gattung ist beispielsweise aus dem Dokument DE 28 18 122 A1 bekannt. Bei diesem bekannten Gerät weist die Andruckeinrichtung eine relativ aufwendige Ausbildung auf, da sie aus einem verschwenkbaren Hebel und einer zusätzlichen Feder besteht, die hierbei als schraubenförmig gewundene Zugfeder ausgebildet ist, die einerseits an einem Teil des Hebels eingehängt ist und andererseits an einem gerätestationären Gegenstück eingehängt ist. Die Montage einer solchen Zugfeder erfordert relativ viel Aufwand und ist insbesondere im Hinblick auf eine automatisierte Fertigung ungünstig.

Die Erfindung hat sich zur Aufgabe gestellt, die vorstehen angeführten Schwierigkeiten zu vermeiden und bei einem Gerät gemäß der im ersten Absatz angeführten Gattung auf einfache Weise eine Verbesserung zu erreichen. Hierfür ist bei einem Gerät entsprechend der eingangs im ersten Absatz angeführten Gattung erfindungsgemäß vorgesehen, daß die Andruckeinrichtung durch eine einzige aus Blattfedermaterial bestehende Feder gebildet ist, die an einer Montageplatte des Gerätes abgestützt ist und die einen zum Zusammenwirken mit der Verriegelungseinrichtung vorgesehenen Federarm aufweist. Auf diese Weise ist eine besonders einfache und preiswerte Andruckeinrichtung bei einem erfindungsgemäßen Gerät realisiert, die zusätzlich den großen Vorteil bietet, daß diese Andruckeinrichtung sich sehr gut für eine automatische Montage bei einer automatisierten Fertigung eignet.

Bei einem erfindungsgemäßen Gerät hat sich als besonders vorteilhaft erwiesen, wenn die Feder im wesentlichen U-förmig ausgebildet ist und einen ersten Federarm, der mit seinem freien Ende an der Montageplatte abgestützt ist, und einen zweiten Federarm aufweist, dessen freies Ende zum Zusammenwirken mit der Verriegelungseinrichtung vorgesehen ist. Eine solche Ausbildung hat sich insbesondere im Hinblick auf einen geringen Raunibedarf und im Hinblick auf eine betriebssichere und alterungsunabhängige Funktionsweise als vorteilhaft erwiesen.

Bei einem erfindungsgemäßen Gerät mit einer durch eine U-förmig ausgebildete Feder gebildeten Andruckeinrichtung hat es sich als besonders vorteilhaft erwiesen, wenn die Feder einen dritten Federarm aufweist, der die Verriegelungseinrichtung in Richtung zu ihrer Verriegelungslage hin belastet. Auf diese Weise ist eine besonders rationelle und einfache bauliche Ausbildung realisiert, bei der die Feder zusätzlich auch zum federnden Belasten der Verriegelungseinrichtung ausgenützt ist.

Bei einem erfindungsgemäßen Gerät hat sich als besonders vorteilhaft erwiesen, wenn eine zwischen einer Blockierlage und einer Freigabelage verstellbare Schutzeinrichtung vorgesehen ist, die einen zum Zusammenwirken mit der Steuereinrichtung vorgesehenen Blockierabschnitt und einen zum Abtasten eines von einer Kassette entfernbaren Schutzelementes vorgesehenen Abtastabschnitt aufweist und die bei von einer eingesetzten Kassette entferntem Schutzelement mit ihrem Blockierabschnitt ein Verstellen der Steuereinrichtung von der ersten Schaltlage in die zweite Schaltlage blockiert. Durch diese zusätzliche Vorkehrung ist weiters erreicht, daß bei einer durch Entfernen des Schutzelementes geschützten und in das Gerät eingesetzten Kassette oder bei nichteingesetzter Kassette die Steuereinrichtung im wesentlichen überhaupt nicht aus ihrer ersten Schaltlage heraus verstellt werden kann.

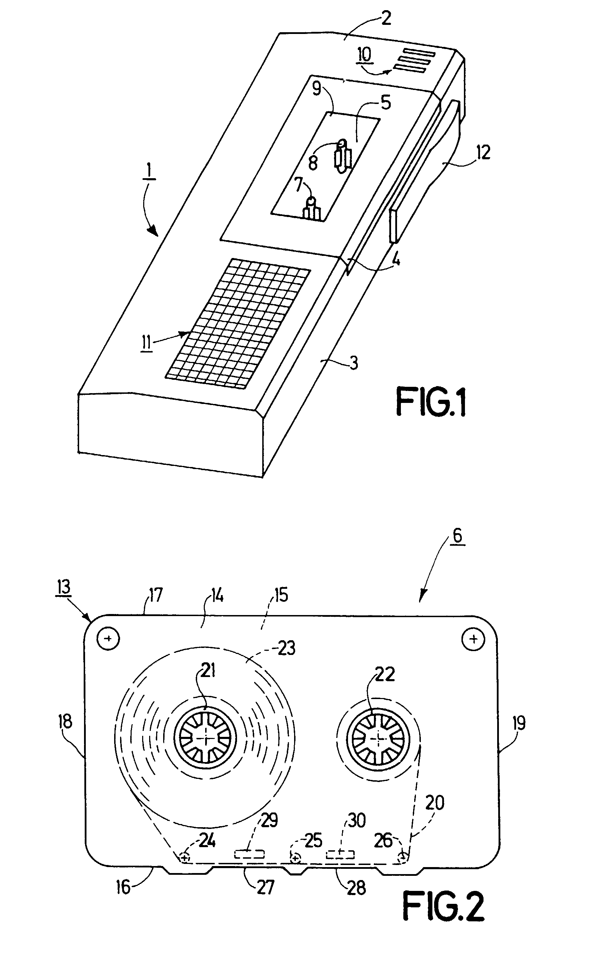

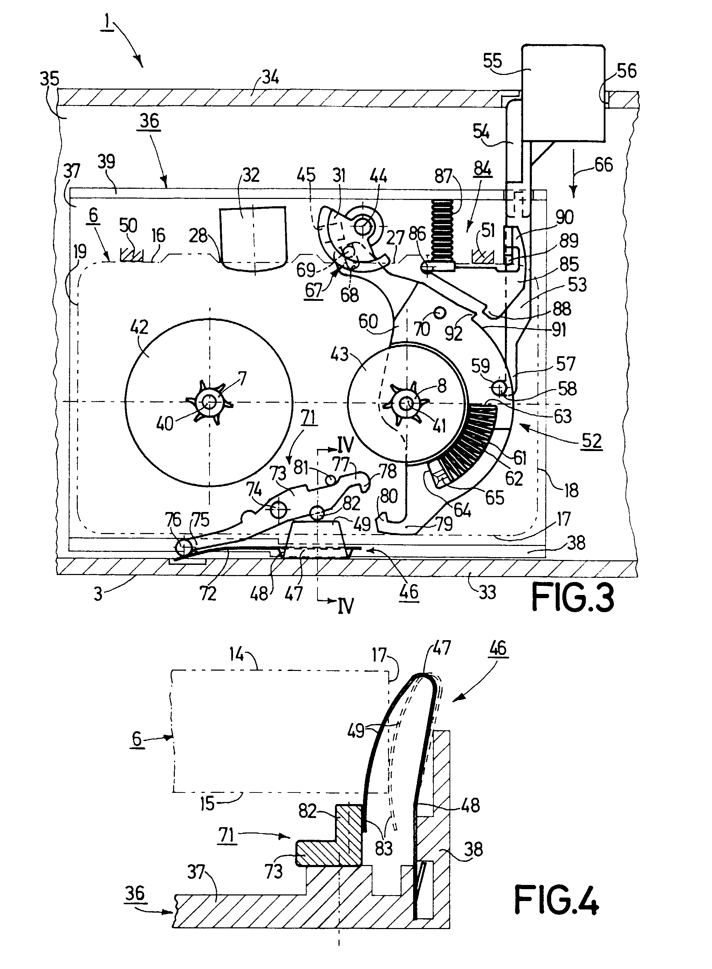

Die Erfindung wird im folgenden anhand von einem in den Zeichnungen dargestellten Ausführungsbeispiel, auf das die Erfindung jedoch nicht beschränkt sein soll, näher beschrieben. Die Fig. 1 zeigt etwa in natürlicher Größe in Schrägansicht ein als Taschendiktiergerät ausgebildetes Aufzeichnungs- und Wiedergabegerät gemäß einem Ausführungsbeispiel der Erfindung, in das eine ein Magnetband als Aufzeichnungsträger enthaltende Kassette einsetzbar ist. Die Fig. 2 zeigt teilweise schematisiert in einem gegenüber der natürlichen Größe größeren Maßstab in Draufsicht eine in das Gerät gemäß Fig. 1 einsetzbare Kassette. Die Fig. 3 zeigt in etwas vereinfachter Weise in einem gegenüber den Figuren 1 und 2 größeren Maßstab in Draufsicht einen Teil des Gerätes gemäß Fig. 1 bei weggeschnittenem Geräteoberteil, wobei der dargestellte Teil des Gerätes eine Steuereinrichtung zum Einschalten einer Betriebsart "Aufnahme" und eine Verriegelungseinrichtung zum Festhalten der Steuereinrichtung sowie eine Andruckeinrichtung zum Belasten einer in das Gerät eingesetzten Kassette in Richtung zu einem Magnetkopf des Gerätes enthalt. Die Fig. 4 zeigt in einem Schnitt längs der Linie IV-IV in Fig. 3 die Andruckeinrichtung und die Verriegelungseinrichtung des Gerätes gemäß den Figuren 1 und 3.

Die Fig. 1 zeigt ein als Taschendiktiergerät ausgebildetes Aufzeichnungs- und Wiedergabegerät 1 zum Aufzeichnen und Wiedergeben von Sprachsignalen. Das Gerät 1 weist einen an der Geräteoberseite 2 verschwenkbar gelagerten, bis in eine in Fig. 1 sichtbare lange Geräteschmalseite 3 reichenden Verschlußdeckel 4 zum Verschließen eines Kassettenaufnahmeraumes 5 auf, in den eine ein Magnetband als Aufzeichnungsträger enthaltende Kassette 6, wie sie in Fig. 2 dargestellt ist, mit ihrer Längserstreckung parallel zur Längserstreckung des Gerätes 1 einsetzbar ist. In Fig. 1 ist eine Situation dargestellt, in der sich keine Kassette in dem Kassettenaufnahmeraum 5 befindet. In den Kassettenaufnahmeraum 5 ragen von der Geräteunterseite her ein Vorlauf-Wickeldorn 7 und Rücklauf-Wickeldorn 8, die durch einen durchsichtigen Fensterteil 9 des Verschlußdeckels 4 hindurch sichtbar sind. An der Geräteoberseite 2 sind weiters eine Reihe 10 von Schalldurchtrittsschlitzen, hinter denen sich ein in das Gerät 1 eingebautes Mikrofon befindet, und ein schematisch dargestelltes Feld 11 von Schalldurchtrittslöchern vorgesehen, hinter denen sich ein in das Gerät 1 eingebauter Lautsprecher befindet. An der in Fig. 1 sichtbaren langen Geräteschmalseite 3 weist das Gerät 1 einen in Längsrichtung dieser Geräteschmalseite 3 verschiebbaren Schiebeknopf 12 zum Einschalten von Bandlauf-Betriebsarten des Gerätes 1 auf. Der Schiebeknopf 12 ist von Hand aus zwischen vier Betriebsstellungen hin und her verschiebbar, wobei diese vier Betriebsstellungen aufeinanderfolgend den Bandlauf-Betriebsarten "Schnellrücklauf", "Stop", "Normalvorlauf" und "Schnellvorlauf" entsprechen.

Die Kassette 6 hat ein quaderförmiges Gehäuse 13, das eine in Fig. 2 sichtbare erste Kassettenhauptseite 14, eine in Fig. 2 nicht sichtbare zweite Kassettenhauptseite 15, eine vordere lange Kassettenschmalseite 16, eine hintere lange Kassettenschmalseite 17, eine gemäß Fig. 2 linke kurze Kassettenschmalseite 18 und eine gemäß Fig. 2 rechte kurze Kassettenschmalseite 19 aufweist. In der Kassette 6 ist als Aufzeichnungsträger zum Speichern von Sprachsignalen ein Magnetband 20 untergebracht, wobei zum Aufwickeln des Magnetbandes 20 zwei nebeneinanderliegende, rotierend antreibbare Wickelkerne 21 und 22 zwischen den beiden Kassettenhauptseiten 14 und 15 drehbar gelagert sind. Das Magnetband 20 ist mit seinen Enden an den Wickelkernen 21 und 22 verankert und bei der in Fig. 2 dargestellten Kassette 6 zur Gänze auf den Wickelkern 21 zu einem Bandwickel 23 aufgewickelt. Das Magnetband 20 verläuft von dem auf den Wickelkern 21 aufgewickelten Bandwickel 23 über drei zylindrische Bandführungen 24, 25 und 26 zu dem anderen Wickelkern 22. Mittels der Bandführungen 24, 25 und 26 ist das Magnetband 20 längs der vorderen langen Kassettenschmalseite 16 geführt, in der zwei Durchbrüche 27 und 28 vorgesehen sind. Im Bereich der beiden Durchbrüche 27 und 28 sind zwei in der Kassette 6 auf nicht dargestellte Weise verstellbar gehaltene Andruckfilze 29 und 30 vorgesehen, mit denen das Magnetband 20 gegen die Kopfspiegelflächen von zwei geräteseitigen, mit dem Magnetband 20 durch die beiden Durchbrüche 27 und 28 hindurch in Abtastverbindung bringbaren Magnetköpfen 31 und 32 drückbar ist. Bei den beiden Magnetköpfen 31 und 32, die in Fig. 3 schematisch dargestellt sind, handelt es sich um einen Lösch-Magnetkopf 31 zum Löschen von Sprachsignalen von dem Magnetband 20 und einen Aufzeichnungs- und Wiedergabe-Magnetkopf 32 zum Aufzeichnen und Wiedergeben von Sprachsignalen auf bzw. von dem Magnetband 20.

Die Kassette 6 ist in zwei zueinander gewendeten Lagen in das Gerät 1 einsetzbar, wobei beim Einsetzen der Kassette 6 die geräteseitigen Wickeldorne 7 und 8 je nach Lage der Kassette 6 durch eine der beiden Kassettenhauptseiten 14 bzw. 15 hindurch mit den Wickelkernen 21 und 22 in Antriebsverbindung treten, so daß bei in das Gerät 1 eingesetzter Kassette 6 jeder der beiden Wickeldorne 7 und 8 mit einem der beiden Wickelkerne 21 und 22 zum Antreiben des Magnetbandes 20 in Antriebsverbindung steht. Bei dem vorliegenden Gerät 1 erfolgt der Antrieb des Magnetbandes 20 in allen Bandlaufbetriebsarten nur durch Antreiben eines der beiden Wickeldorne 7 und 8.

Im folgenden ist anhand der Figuren 3 und 4 der im Zusammenhang mit der Erfindung wesentliche Teil des Gerätes 1 gemäß Fig. 1 beschrieben. In dem Raum zwischen zwei langen Seitenwänden 33 und 34, von denen die Seitenwand 33 an der langen Geräteschmalseite 3 liegt, und einer Bodenwand 35 des Gerätegehäuses ist eine Montageplatte 36 festgehalten, die einen parallel zur Bodenwand 35 verlaufenden Plattenteil 37 und zwei von diesem Plattenteil 37 im wesentlichen senkrecht abstehende Plattenteile 38 und 39 aufweist. In die Montageplatte 36 sind zwei Achsen 40 und 41 drehfest eingesetzt. Auf der Achse 40 ist der Vorlauf-Wickeldorn 7 und auf der Achse 41 ist der Rücklauf-Wickeldorn 8 drehbar gelagert. Jeder der beiden Wickeldorne 7 und 8 ist mit einem von zwei je zu einem der beiden Wickeldorne 7 und 8 koaxial angeordneten Wickeldornrädern 42 und 43 drehfest verbunden. Das mit dem Vorlauf-Wickeldorn 7 drehfest verbundene Wickeldornrad 42 ist als Reibrad ausgebildet. Das mit dem Rücklauf-Wickeldorn 8 drehfest verbundene Wickeldornrad 43 ist als Zahnrad ausgebildet.

Wie bereits vorstehend erwähnt, weist das Gerät 1 zwei Magnetköpfe 31 und 32 auf, von denen der Magnetkopf 31 ein Löschkopf ist. Dabei ist der Magnetkopf 31 als sogenannter Permanentmagnet-Löschkopf ausgebildet. Der Löschkopf 31 ist um eine Achse 44 verschwenkbar gelagert. Der Löschkopf 31 trägt einen Permanentmagneten 45, der aus einer in Fig. 3 dargestellten Nichtbetriebsposition durch Verschwenken des gesamten Löschkopfes 31 entgegen dem Uhrzeigersinn um die Achse 44 in eine Betriebsposition verschwenkbar ist, in der der Permanentmagnet 45 mit dem in der Kassette 6 untergebrachten Magnetband 20 in Abtastverbindung steht, so daß dann bei einem Fortbewegen des Magnetbandes 20 mit Hilfe des Permanentmagneten 45 auf dem Magnetband 20 zuvor aufgezeichnete Signale gelöscht werden. Ein solches Löschen von zuvor aufgezeichneten Signalen wird bei dem Gerät 1 in der Betriebsart "Aufnahme" des Gerätes 1 vorgenommen, weshalb der Permanentmagnet 45 des Löschkopfes 31 in seine Betriebsposition verschwenkt wird, wenn im Gerät 1 die Betriebsart "Aufnahme" eingeschaltet wird.

Das Gerät 1 weist weiters eine verstellbare Andruckeinrichtung 46 auf, mit der eine in das Gerät 1 eingesetzte Kassette 6, die in den Figuren 3 und 4, der Deutlichkeit dieser Figuren wegen, nur mit einer strichpunktierten Linie angedeutet ist, in Richtung zu den beiden Magnetköpfen 31 und 32 hin belastbar ist. Die Andruckeinrichtung 46 ist zwischen einer Ruhelage, die sie einnimmt, wenn keine Kassette 6 in das Gerät 1 eingesetzt ist, und die in Fig. 4 mit einer vollen Linie dargestellt ist, und einer Andrucklage verstellbar, in der sie auf eine in das Gerät 1 eingesetzte Kassette 6 einwirkt. Die Andruckeinrichtung 46 ist in Richtung zur Ruhelage hin federbelastet, wobei im vorliegenden Fall diese Federbelastung auf einfache Weise dadurch erreicht wird, daß die gesamte Andruckeinrichtung 46 durch eine einzige aus Blattfedermaterial bestehende Feder 47 gebildet ist. Die Feder 47 weist im wesentlichen eine U-förmige Form auf und besteht hiebei aus einem ersten Federarm 48, der mit seinem freien Ende in dem abgewinkelten Plattenteil 38 der Montageplatte 36 abgestützt ist, und aus einem zweiten Federarm 49, der zum Zusammenwirken mit der hinteren langen Kassettenschmalseite 17 einer Kassette 6 vorgesehen und ausgebildet ist, wie dies aus Fig. 4 ersichtlich ist. Bei an der hinteren langen Kassettenschmalseite 17 einer Kassette 6 angreifendem zweiten Federarm 49 ist die Kassette 6 im Bereich ihrer vorderen langen Kassettenschmalseite 16 an zwei von der Montageplatte 36 getragenen Positionieranschlägen 50 und 51 abgestützt, die in Fig. 3 nur schematisch angedeutet sind.

Zum Einschalten der Betriebsart "Aufnahme" im Gerät 1 weist das Gerät 1 eine Steuereinrichtung 52 auf. Die Steuereinrichtung 52 umfaßt einen Tastenschieber 53 der im Bereich eines Endes 54 desselben mit einem Tastenknopf 55 verbunden ist, der durch eine Öffnung 56 in der Gehäusewand 34 hindurchgeführt ist und auf diese Weise bei im Betrieb in der Hand gehaltenem Gerät 1 mit Hilfe beispielsweise des Mittelfingers betätigbar ist. An seinem dem Ende 54 gegenüberliegenden Ende 57 steht von dem Tastenschieber 53 ein Stift 58 ab, der in ein Loch 59 ragt, das in einem Steuerhebel 60 der Steuereinrichtung 52 vorgesehen ist. Der Steuerhebel 60 ist hiebei um die feststehende Achse 41 verschwenkbar gelagert. In dem Steuerhebel 60 ist eine kreisbogenförmige Aussparung 61 vorgesehen, in der eine Druckfeder 62 aufgenommen ist, die sich einerseits an einem Ende 63 der Aussparung 61 und andererseits an einem im Bereich des anderen Endes 64 der Aussparung 61 in diese Aussparung 61 ragenden, von dem Plattenteil 37 der Montageplatte 36 senkrecht abstehenden Anschlag 65 abstützt. Die Druckfeder 62 belastet den Steuerhebel 60 gemäß Fig. 3 entgegen dem Uhrzeigersinn, was bei der in Fig. 3 dargestellten Situation zur Folge hat, daß sich der Steuerhebel 60 mit dem Ende 64 seiner Aussparung 61 an dem Anschlag 65 abstützt, wodurch die Lage des Steuerhebels 60 und des über die durch den Stift 58 und das Loch 59 gebildete Stift-Loch-Verbindung mit dem Steuerhebel 60 gekoppelten Tastenschiebers 53 in dieser Situation festgelegt ist. Bei dieser Lage handelt es sich um eine erste Schaltlage. Die Steuereinrichtung 52, die somit im wesentlichen aus dem Tastenschieber 53 samt dem Tastenknopf 55 sowie dem Steuerhebel 60 besteht, ist zwischen dieser ersten Schaltlage, die in Fig. 3 dargestellt ist, und einer zweiten Schaltlage verstellbar, die jedoch in Fig. 3 der Einfachheit halber nicht dargestellt ist. In der ersten Schaltlage der Steuereinrichtung 52 ist im Gerät 1 die Betriebsart "Wiedergabe" eingeschaltet. In der zweiten Schaltlage der Steuereinrichtung 52 ist im Gerät 1 die Betriebsart "Aufnahme" eingeschaltet. Aus der ersten Schaltlage, die in Fig. 3 dargestellt ist, ist die Steuereinrichtung 52 durch Verstellen des Tastenknopfes 55 in Richtung des Pfeiles 66 in ihre zweite Schaltlage verstellbar. Durch ein solches Verstellen des Tastenknopfes 55 in Richtung des Pfeiles 66 wird auch der Tastenschieber 53 in Richtung des Pfeiles 66 verschoben, was ein Verschwenken des Steuerhebels 60 der Steuereinrichtung 52 im Uhrzeigersinn entgegen der Wirkung der Druckfeder 62 zur Folge hat. Hiebei wird der Löschkopf 31, der über eine weitere Stift-Schlitz-Verbindung 67, die durch einen im Steuerhebel 60 vorgesehenen Schlitz 68 und einen vom Löschkopf 31 abstehenden Stift 69 gebildet ist, entgegen dem Uhrzeigersinn verschwenkt, so daß der Permanentmagnet 45 in seine Betriebsposition verschwenkt wird. Bei dem Verschwenken des Steuerhebels 60 wird weiters mit Hilfe von einem vom Steuerhebel 60 senkrecht abstehenden Steuerstift 70 ein nicht dargestellter elektrischer Aufnahme/Wiedergabe-Schalter betätigt, mit dem hiebei das Gerät 1 von seiner Wiedergabe-Funktion in seine Aufnahme-Funktion umgeschaltet wird.

Zum Festhalten der Steuereinrichtung 52 in ihrer zweiten Schaltlage weist das Gerät 1 eine Verriegelungseinrichtung 71 auf. Die Verriegelungseinrichtung 71 ist zwischen einer in Fig. 3 dargestellten Freigabelage und einer in Fig. 3 nicht dargestellten Verriegelungslage verstellbar, in der sie die Steuereinrichtung 52 in ihrer zweiten Schaltlage festhält. Die Verriegelungseinrichtung 71 ist hiebei zu ihrer Verriegelungslage hin federbelastet, was im vorliegenden Fall so gelöst ist, daß die zur Bildung der Andruckeinrichtung 46 herangezogene Feder 47 von ihrem ersten Federarm 48 seitlich abstehend einen dritten Federarm 72 aufweist, der die Verriegelungseinrichtung 71 in Richtung zu ihrer Verriegelungslage hin belastet. Die Verriegelungseinrichtung 71 weist beim Gerät 1 einen zweiarmigen Verriegelungshebel 73 auf, der um eine Achse 74 verschwenkbar gelagert ist, wobei die Achse 74 von der Montageplatte 36 getragen ist. An einem Ende 75 weist der Verriegelungshebel 73 einen senkrecht abstehenden zylindrischen Fortsatz 76 auf, an dem der dritte Federarm 72 der Feder 47 angreift. An dem anderen Ende 77 des Verriegelungshebels 73 ist derselbe mit einem Haken 78 versehen, der zum Zusammenwirken mit einem an einem Ende 79 des Steuerhebels 60 vorgesehenen Gegenhaken 80 vorgesehen ist. Zum Festlegen der Freigabelage des Verriegelungshebels 73 der Verriegelungseinrichtung 71 ist ein von der Montageplatte 36 abstehender Anschlagstift 81 vorgesehen, an dem sich der Hebel 73 unter der Wirkung des dritten Federarmes 72 der Feder 47 abstützt.

Bei dem Gerät 1 sind nunmehr die Andruckeinrichtung 46 und die Verriegelungseinrichtung 71 zum miteinander Zusammenwirken angeordnet und ausgebildet. Hiefür sind die Andruckeinrichtung 46 und die Verriegelungseinrichtung 71 nebeneinanderliegend im Gerät 1 angeordnet und ist der Verriegelungshebel 73 der Verriegelungseinrichtung 71 mit einem vom Verriegelungshebel 73 senkrecht abstehenden Kopplungsstift 82 versehen, der in den Bereich des freien Endes 83 des zweiten Federarmes 49 der die Andruckeinrichtung 46 bildenden Feder 47 ragt und an dem der zweite Federarm 49 der Feder 47 angreift. Die Kraft des zweiten Federarmes 49 ist dabei wesentlich größer gewählt als die Kraft des dritten Federarmes 72, der ebenfalls am Verriegelungshebel 73 angreift. Bei nichteingesetzter Kassette hält auf diese Weise, die hiebei in ihrer Ruhelage befindliche Andruckeinrichtung 46, also die Feder 47, die Verriegelungseinrichtung 71, also im wesentlichen den Verriegelungshebel 73, in ihrer Freigabelage, wie dies in Fig. 3 und in Fig. 4 mit einer vollen Linie dargestellt ist. Bei eingesetzter Kassette 6 gibt die hiebei in ihre Andrucklage verstellte Andruckeinrichtung 46, also die Feder 47, die Verriegelungseinrichtung 71, also im wesentlichen den Verriegelungshebel 73, zur Verstellung in ihre Verriegelungslage frei, wie dies in Fig. 4 mit einer strichlierten Linie angedeutet ist. Bei in das Gerät 1 eingesetzter Kassette 6 wird also der Verriegelungshebel 73 unter der Wirkung des dritten Federarmes 72 der Feder 47 so weit verstellt, daß der Verriegelungshebel 73 seine Verriegelungslage einnimmt, so daß der Verriegelungshebel 73 mit seinem Haken 78 den Gegenhaken 80 des Steuerhebels 60 und damit die gesamte Steuereinrichtung 52 verriegeln und festhalten kann, nachdem eine Verstellung der Steuereinrichtung 52 von ihrer ersten Schaltlage in ihre zweite Schaltlage vorgenommen wurde.

Das Gerät 1 weist weiters eine Schutzeinrichtung 84 auf, mit der ein Verstellen der Steuereinrichtung 52 von deren erster Schaltlage in deren zweite Schaltlage blockierbar ist. Die Schutzeinrichtung 84 weist einen Schutzhebel 85 auf, der um eine Achse 86 gegenüber der Montageplatte 36 verschwenkbar gelagert ist und an dem eine Druckfeder 87 angreift, die an dem Plattenteil 39 der Montageplatte 36 abgestützt ist. Die Schutzeinrichtung 84 ist zwischen einer in Fig. 3 dargestellten Freigabelage und einer in Fig. 3 nicht dargestellten Blockierlage verstellbar. Die Schutzeinrichtung 84 weist einen zum Zusammenwirken mit der Steuereinrichtung 52, und zwar mit dem Steuerhebel 60 der Steuereinrichtung 52 vorgesehenen Blockierabschnitt 88 auf, der durch einen nasenförmigen Vorsprung des Schutzhebels 85 gebildet ist. Weiters weist die Schutzeinrichtung 84 einen zum Abtasten eines von einer Kassette 6 entfernbaren Schutzelementes vorgesehenen Abtastabschnitt 89 auf, der im vorliegenden Fall durch einen von einem Seitenarm 90 des Schutzhebels 85 abstehenden Fühlstift gebildet ist. Bei der in Fig. 3 dargestellten Situation ist das an sich entfernbare Schutzelement der Kassette 6 von dieser Kassette 6 nicht entfernt und daher ein Aufzeichnen von Signalen auf dem Magnetband 20 der Kassette 6 gestattet. Dies hat zur Folge, daß über den Fühlstift 89 der Schutzhebel 85 entgegen der Wirkung der Druckfeder 87 in seiner Freigabelage verstellt gehalten ist. Wenn in das Gerät 1 eine Kassette 6 eingesetzt wird, bei der das entfernbare Schutzelement tatsächlich entfernt wurde, um ein Aufzeichnen von Signalen auf dem Magnetband 20 der Kassette 6 unmöglich zu machen, dann bleibt der Fühlstift 89 auch bei in das Gerät 1 eingesetzter Kassette 6 unverstellt in seiner Ausgangslage, was zur Folge hat, daß der Schutzhebel 85 unter der Wirkung der Druckfeder 87 in seiner Blockierlage gehalten bleibt, in der sich der Vorsprung 88 an einer Begrenzungswand 91 des Steuerhebels 60 abstützt, wobei dann der als Blockierabschnitt vorgesehene Vorsprung 88 sich im Verstellweg einer am Steuerhebel 60 vorgesehenen Nase 92 befindet, was zur Folge hat, daß der Vorsprung 88 über die Nase 92 ein Verstellen des Steuerhebels 60 und folglich des Tastenschiebers 53 samt dem Tastenknopf 55 von der ersten Schaltlage in die zweite Schaltlage blockiert.

Bei dem vorstehend beschriebenen Gerät ist durch das miteinander Zusammenwirken der Andruckeinrichtung und der Verriegelungseinrichtung, wie dies vorstehend beschrieben ist, auf besonders einfache Weise erreicht, daß die Verriegelungseinrichtung für die Steuereinrichtung nur bei einer in das Gerät eingesetzten Kassette zum Verriegeln freigegeben wird, jedoch bei nichteingesetzter Kassette in ihrer Ruhelage festgehalten wird, so daß die Verriegelung der Steuereinrichtung zum Einschalten der Betriebsart "Aufnahme" von der Anwesenheit einer Kassette im Gerät abhängig ist. Wenn beim vorliegenden Gerät keine Kassette oder eine Kassette mit entferntem Schutzelement in das Gerät eingesetzt ist, wird dies mit Hilfe der Schutzeinrichtung festgestellt, welche daraufhin eine Verstellung der Steuereinrichtung zum Einschalten der Betriebsart "Aufnahme" in ihre zweite Schaltlage unmöglich macht. Wenn hingegen eine Kassette mit nichtentferntem Schutzelement in das Gerät eingesetzt wird, wird einerseits die Verriegelungseinrichtung für die Steuereinrichtung aktiviert und kann andererseits die Steuereinrichtung in ihre zweite Schaltlage verstellt werden, in der sie dann von der zuvor aktivierten Verriegelungseinrichtung festgehalten wird. Bei einem nachfolgenden Entnehmen der Kassette aus dem Gerät, wobei dann die Andruckeinrichtung aufgrund der fehlenden Kassette in ihre Ruhelage zurückkehrt, verstellt die Andruckeinrichtung die Verriegelungseinrichtung zwangsweise in ihre Freigabelage zurück, so daß die Verriegelungseinrichtung die Steuereinrichtung zum Einschalten der Betriebsart "Aufnahme" freigibt und daher die Steuereinrichtung in ihre erste Schaltlage zurückkehrt. Die Steuerung des Zurückkehrens der Steuereinrichtung in ihre erste Schaltlage ist somit auf besonders vorteilhafte Weise direkt von der Kassette her gesteuert.

Die Erfindung ist nicht auf das vorstehend beschriebene Ausführungsbeispiel beschränkt, da sie auch bei anderen Ausführungsvarianten zum Einsatz kommen kann. Beispielsweise kann die Steuereinrichtung zum Einschalten der Betriebsart "Aufnahme" eine andere Ausbildung aufweisen, etwa einen von Hand aus betätigbaren Schiebeknopf anstelle eines Druckknopfes und auch einen verschiebbar geführten Steuerschieber anstelle eines schwenkbar gelagerten Steuerhebels. Auch kann eine Andruckeinrichtung eine andere Ausbildung aufweisen und beispielsweise mit Hilfe eines federbelasteten Hebels aufgebaut sein. Auch für die Verriegelungseinrichtung sind andere Ausbildungsvarianten denkbar. Es kann aber eine Steuereinrichtung eines Gerätes zum Einschalten einer Betriebsart des Gerätes in der zweiten Schaltlage der Steuereinrichtung auch zum Einschalten einer anderen Betriebsart als der Betriebsart "Aufnahme" vorgesehen sein, obwohl die erfindungsgemäßen Maßnahmen bevorzugt zur Anwendung im Zusammenhang mit der Betriebsart "Aufnahme" gedacht sind.

## Patentansprüche

1. Aufzeichnungs- und/oder Wiedergabegerät (1), in das eine ein Magnetband (2) enthaltende Kassette (6) einsetzbar ist.
mit mindestens einem Magnetkopf (31, 32) zum Abtasten eines in einer in das Gerät (1) eingesetzten Kassette (6) enthaltenen Magnetbandes (20),
mit mindestens einer zwischen einer Ruhelage und einer Andrucklage verstellbaren, in ihrer Andrucklage auf eine in das Gerät (1) eingesetzte Kassette (6) einwirkenden, zur Ruhelage hin federbelasteten Andruckeinrichtung (46) zum Belasten der eingesetzten Kassette (6) in Richtung zu dem Magnetkopf (31, 32),
mit einer zwischen einer ersten Schaltlage und einer zweiten Schaltlage verstellbaren. zur ersten Schaltlage hin federbelasteten Steuereinrichtung (52) zum Einschalten einer Betriebsart des Gerätes (1) in ihrer zweiten Schaltlage und
mit einer zum Festhalten der Steuereinrichtung (52) in ihrer zweiten Schaltlage vorgesehenen, zwischen einer Freigabelage und einer Verriegelungslage verstellbaren, zur Verriegelungslage hin federbelasteten Verriegelungseinrichtung (71), die beim Entnehmen einer Kassette (6) aus dem Gerät (1) in ihre Freigabelage verstellt wird.
wobei die Andruckeinrichtung (46) und die Verriegelungseinrichtung (71) zum miteinander Zusammenwirken angeordnet und ausgebildet sind und wobei bei nichteingesetzter Kassette (6) die hierbei in ihrer Ruhelage befindliche Andruckeinrichtung (46) die Verriegelungseinrichtung (71) in ihrer Freigabelage hält und bei eingesetzter Kassette (6) die hierbei in ihre Andrucklage verstellte Andruckeinrichtung (46) die Verriegelungseinrichtung (71) zur Verstellung in ihre Verriegelungslage freigibt, dadurch gekennzeichnet,
daß die Andruckeinrichtung (46) durch eine einzige aus Blattfedermaterial bestehende Feder (47) gebildet ist, die an einer Montageplatte (36) des Gerätes (1) abgestützt ist und die einen zum Zusammenwirken mit der Verriegelungseinrichtung (71) vorgesehenen Federarm (49) aufweist.

2. Gerät nach Anspruch 1, dadurch gekennzeichnet, daß die Feder (47) im wesentlichen U-förmig ausgebildet ist und einen ersten Federarm (48), der mit seinem freien Ende an der Montageplatte (36) abgestützt ist, und einen zweiten Federarm (49) aufweist, dessen freies Ende (83) zum Zusammenwirken mit der Verriegelungseinrichtung (71) vorgesehen ist.

3. Gerät (1) nach Anspruch 2, dadurch gekennzeichnet, daß die Feder (47) einen dritten Federarm (72) aufweist, der die Verriegelungseinrichtung (71) in Richtung zu ihrer Verriegelungslage hin belastet.

4. Gerät nach einem der Ansprüche 1 bis 3, dadurch gekennzeichnet, daß eine zwischen einer Blockierlage und einer Freigabelage verstellbare Schutzeinrichtung (84) vorgesehen ist, die einen zum Zusammenwirken mit der Steuereinrichtung (52) vorgesehenen Blockierabschnitt (88) und einen zum Abtasten eines von einer Kassette (6) entfernbaren Schutzelementes vorgesehenen Abtastabschnitt (89) aufweist und die bei von einer eingesetzten Kassette (6) entferntem Schutzelement mit ihrem Blockierabschnitt (88) ein Verstellen der Steuereinrichtung (52) von der ersten Schaltlage in die zweite Schaltlage blockiert.

## Claims

1. A recording and/or reproducing apparatus (1) adapted to receive a cassette (6) accommodating a magnetic tape (20), which apparatus comprises at least one magnetic head (31, 32) for scanning a magnetic tape (20) accommodated in a cassette (6) inserted into the apparatus (1), at least one pressure device (46), which is movable between a rest position and a pressure position, which in its pressure position acts upon a cassette (6) inserted into the apparatus (1), and which is spring-loaded towards the rest position, for urging the inserted cassette (6) towards the magnetic head (31, 32), a control device (52), which is movable between a first switching position and a second switching position and which is spring-loaded towards the first switching position, for starting a mode of operation of the apparatus (1) in the second switching position, and a locking device (71) which is adapted to lock the control device (52) in its second switching position. which locking device is movable between a release position and a locking position, which is spring-loaded towards the locking position, and which is set to the release position when a cassette (6) is removed from the apparatus (1), the pressure device (46) and the locking device (71) being arranged and constructed to cooperate with one another and, without a cassette (6) inserted, the pressure device (46), which is then in its rest position, holding the locking device (71) in its release position and, with a cassette (6) inserted, the pressure device (46), which is then moved to its pressure position, releasing the locking device (71) to allow the movement into its locking position, characterized in that
the pressure device (46) comprises a single spring (47) made of a eaf-spring material, which spring bears upon the mounting plate (36) of the apparatus and has a spring arm (49) adapted to cooperate with the locking device (71).

2. An apparatus as claimed in Claim 1, characterized in that the spring (47) is substantially U-shaped and comprises a first spring arm (48), whose free end bears upon the mounting plate (36), and a second spring arm (49), whose free end (83) is adapted to cooperate with the locking device (71).

3. An apparatus (1) as claimed in Claim 2, characterized in that the spring (47) comprises a third spring arm (72) which urges the locking device (71) towards its locking position.

4. An apparatus as claimed in any one of the Claims 1 to 3, characterized in that there has been provided a protection device (84) which is movable between a blocking position and a release position, which comprises a blocking element (88) adapted to cooperate with the control device (52) and a sensing element (89) adapted to detect a removable protection element of a cassette (6), and which by means of its blocking element (88) blocks a movement of the control device (52) from the first switching position to the second switching position when the protection element has been removed from an inserted cassette (6).

## Revendications

1. Appareil d'enregistrement et/ou de reproduction (1) dans lequel une cassette (6) contenant une bande magnétique (2) peut être insérée,
avec au moins une tête magnétique (31, 32) en vue de la lecture d'une bande magnétique (20) contenue dans la cassette (6) insérée dans l'appareil (1),
avec au moins un dispositif de pression (46) mobile entre une position de repos et une position de pression, agissant dans sa position de pression sur une cassette (6) insérée dans l'appareil (1) et chargé par ressort dans la direction de sa position de repos en vue de charger la cassette (6) insérée dans la direction de la tête magnétique (31, 32),
avec un dispositif de commande (52) mobile entre une première position de commutation et une deuxième position de commutation et chargé par ressort vers la première position de commutation en vue de l'activation d'un mode de fonctionnement de l'appareil (1) dans sa deuxième position de commutation et
avec un dispositif de verrouillage (71) prévu en vue de maintenir le dispositif de commande (52) dans sa deuxième position de commutation, mobile entre une position de déblocage et une position de verrouillage et chargé par ressort dans la direction de sa position de verrouillage, lequel dispositif est déplacé dans sa position de déblocage lorsqu'une cassette (6) est extraite de l'appareil (1), le dispositif de pression (46) et le dispositif de verrouillage (71) étant disposés et conçus en vue de coopérer réciproquement et, lorsque la cassette (6) n'est pas insérée, le dispositif de pression (46) se trouvant en l'occurrence dans sa position de repos maintenant le dispositif de verrouillage (71) dans sa position de déblocage et, lorsque la cassette (6) est insérée, le dispositif de pression (46) déplacé en l'occurrence dans sa position de pression débloquant le dispositif de verrouillage (71) en vue du déplacement dans sa position de verrouillage,
caractérisé en ce que
le dispositif de pression (46) est formé par un seul ressort (47) composé d'un matériau en ressort à lame qui est appuyé sur une plaque de montage (36) de l'appareil (1) et qui présente un bras de ressort (49) prévu en vue de coopérer avec le dispositif de verrouillage (71)

2. Appareil selon la revendication 1, caractérisé en ce que le ressort (47) est essentiellement conçu en forme de U et présente un premier bras de ressort (48) qui est appuyé par son extrémité libre sur la plaque de montage (36) et un deuxième bras de ressort (49) dont l'extrémité libre (83) est prévue pour coopérer avec le dispositif de verrouillage (71).

3. Appareil (1) selon la revendication 2, caractérisé en ce que le ressort (47) présente un troisième bras de ressort (72) qui charge le dispositif de verrouillage (71) dans la direction de sa position de verrouillage.

4. Appareil selon l'une des revendications 1 à 3, caractérisé en ce qu'un dispositif de protection (84) mobile entre une position de blocage et une position de déblocage est prévu et présente une section de blocage (88) destinée à coopérer avec le dispositif de commande (52) et une section de lecture (89) destinée à la lecture d'un élément de protection amovible d'une cassette (6) et qui, lorsqu'un élément de protection est enlevé de la cassette (6) insérée, bloque, par sa section de blocage (88), le déplacement du dispositif de commande (52) de la première position de commutation dans la deuxième position de commutation.
